(19) **Europäisches Patentamt / European Patent Office / Office européen des brevets**

(11) **EP 3 801 975 B1**

(12) **FASCICULE DE BREVET EUROPEEN**

(45) Date de publication et mention de la délivrance du brevet:
**16.08.2023 Bulletin 2023/33**

(21) Numéro de dépôt: **19729280.8**

(22) Date de dépôt: **07.06.2019**

(51) Classification Internationale des Brevets (IPC):
**B23K 26/36** *(2014.01)* **B23K 26/142** *(2014.01)*
**B23K 26/70** *(2014.01)*

(52) Classification Coopérative des Brevets (CPC):
**B23K 26/36; B23K 26/142; B23K 26/703**

(86) Numéro de dépôt international:
**PCT/EP2019/064920**

(87) Numéro de publication internationale:
**WO 2019/234210 (12.12.2019 Gazette 2019/50)**

(54) **METHODE ET SYSTEME DE GESTION DE POUSSIERES POUR USINAGE LASER**

STAUBREGULIERUNGSVERFAHREN UND LASERBEARBEITUNGSANLAGE

DUST MANAGEMENT METHOD AND SYSTEM FOR LASER MACHINING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.06.2018 BE 201805382**

(43) Date de publication de la demande:
**14.04.2021 Bulletin 2021/15**

(73) Titulaire: **Laser Engineering Applications**
**4102 Seraing (BE)**

(72) Inventeurs:
• **RAMOS DE CAMPOS, Jose, Antonio**
**4031 Angleur (BE)**
• **CHAMPION, Audrey**
**4100 Boncelles (BE)**
• **LIROT, Laurent**
**4020 Liège (BE)**
• **BRUNEEL, David**
**4920 Sougné-Remouchamps (BE)**
• **KUPISIEWICZ, Axel**
**4122 Neupré (BE)**

(74) Mandataire: **Gevers Patents**
**Intellectual Property House**
**Holidaystraat 5**
**1831 Diegem (BE)**

(56) Documents cités:
**DE-A1-102014 203 576 JP-A- H11 254 176**

EP 3 801 975 B1

**Description**

**Domaine technique**

La présente invention concerne une méthode et un système de gestion de poussières pour usinage laser.

**Art antérieur**

Le terme « usinage d'une pièce » désigne usuellement une application d'une ou plusieurs techniques d'enlèvement de matière pour donner une fonction, une rugosité, une géométrie, une forme et/ou des dimensions voulues à la pièce. De telles techniques sont aujourd'hui abondamment utilisées car elles permettent d'obtenir des pièces de très grandes précisions.

L'usinage d'une pièce peut être réalisé en focalisant un rayon laser de façon à générer une grande quantité d'énergie sur une petite portion de la pièce. Cette technique est appelée « usinage laser » (ou « ablation laser »). Le terme plus spécifique « micro-usinage laser » est utilisé pour désigner un usinage laser lorsque les tolérances ou les dimensions associées à la pièce à usiner sont de l'ordre du micromètre.

Durant un usinage d'une pièce, qu'il soit mis en oeuvre au moyen d'un laser ou non, des poussières sont généralement produites. Celles-ci composent, entre autres, de débris, de copeaux, de limailles ou autres éclaboussures. Ces poussières ne sont pas destinées à être incorporées à la pièce usinée. Il convient donc de les évacuer et/ou les collecter et/ou recycler.

Le document JP H11 254176 A divulgue un équipement de collecte de poussières de combustion générer lors de l'usinage d'une bande de papier, par exemple un papier filtre de cigarette, pour y pratiquer des ouvertures. Cet équipement comprend des conduits à la fois pour acheminer et récupérer un flux d'air au dessus de la bande.

Cet équipement est suffisant pour récupérer des poussières de combustion d'usinage de la bande. Toutefois, il ne suffit pas pour évacuer et récupérer des poussières d'usinage lors de la production de certains dispositifs médicaux à base de polymères, mais aussi lors de l'enlèvement de certains revêtements à l'aide d'un laser. En effet, lors d'un usinage laser d'une telle pièce, la focalisation d'un rayon laser sur une portion d'une pièce est susceptible de générer une élévation de la température de la matière constituant cette portion. Les poussières produites sont alors susceptibles contaminer la pièce usinée car elles peuvent rester coller à sa surface à cause de la viscosité et de la température élevé de la matière. Une évacuation et une gestion rapides et efficaces des poussières lors d'un usinage laser constituent donc un problème critique. En particulier, à ce jour, l'utilisation des technologies d'usinage laser actuelles pour produire certaines pièces de haute précision est rendu impossible lorsque le risque de contamination par des poussières est trop important.

**Résumé de l'invention**

Un objet de la présente invention est de fournir une méthode de gestion de poussières qui apparaissent lors d'un usinage laser (ou un micro-usinage laser) dont la mise en oeuvre est simple, permettant une évacuation particulièrement rapide et efficace desdites poussières loin de la pièce à usiner.

À cet effet, l'invention propose une méthode de gestion de poussières d'usinage lors d'un usinage laser d'une pièce à usiner, la méthode comprenant les étapes suivantes :

(i) fournir un dispositif d'usinage laser comprenant :

- une source laser ;
- un support d'usinage comprenant une extrémité haute et une extrémité basse
  pour recevoir et supporter une pièce à usiner
  par l'application d'une force dirigée de l'extrémité basse vers l'extrémité haute ;
- un système optique
  pour diriger un faisceau laser généré par la source laser vers le support d'usinage,
  selon une ou plusieurs trajectoires d'attaque,

  chacune des une ou plusieurs trajectoires d'attaque étant caractérisée par un vecteur $\overrightarrow{AB}$ dirigé au moins partiellement de l'extrémité haute vers l'extrémité basse ;
- des moyens de génération pour générer un flux de gaz ;

- des moyens de direction
  pour diriger le flux de gaz vers une zone surplombant le support d'usinage,

le long d'une trajectoire principale caractérisée, au-dessus du support d'usinage, par un vecteur $\vec{v}$ dirigé partiellement de l'extrémité basse vers l'extrémité haute ;
pour créer un effet d'aspiration apte à entraîner un gaz à distance du support d'usinage ;
- des moyens de récupération pour récupérer au moins une partie du gaz ;

(ii) placer la pièce à usiner sur le support d'usinage ;
(iii) activer la source laser pour générer le faisceau laser ;
(iv) diriger le faisceau laser

au moyen du système optique
vers le support d'usinage,
selon les une ou plusieurs trajectoires d'attaque ;

(v) activer les moyens de génération pour générer le flux de gaz ;
(vi) diriger le flux de gaz
au moyen des moyens de direction,
vers la zone surplombant le support d'usinage,
le long de la trajectoire principale, au-dessus de la pièce à usiner, pour créer l'effet d'aspiration,
pour entraîner le gaz à distance du support d'usinage ;
(vii) récupérer au moins une partie du gaz
au moyen des moyens de récupération.

La méthode proposée par l'invention est particulièrement avantageuse. Elle est très simple à mettre en oeuvre et permet une évacuation très rapide et très efficace de poussières susceptible d'apparaitre lors d'un usinage laser (ou micro-usinage laser) de la pièce à usiner effectué au moyen du faisceau laser.

Avant d'étayer cette assertion, rappelons que la géométrie de l'espace spatial ambiant dans lequel des problématiques de la physique et de la mécanique classique de base sont considérés à notre échelle est usuellement celle d'un espace euclidien tridimensionnel sans courbure, c'est-à-dire un espace vectoriel muni d'un produit scalaire, qui, de façon préférentielle, est muni d'un repère orthonormé, et qui peut être assimilé à l'espace vectoriel

$$\mathbb{R}^3 = \{(x, y, z) : x, y, z \in \mathbb{R}\}.$$

Nous adopterons ce modèle algébraïco-géométrique d'espace dans le cadre du présent document. Nous le désignerons, entre autres, par les termes « espace » ou « espace euclidien tridimensionnel », ces termes étant généralement assimilés dans le cadre du présent document.

En outre, dans le cadre du présent document, le terme « vecteur » désigne un vecteur de l'espace, c'est-à-dire un élément de l'espace vectoriel $\mathbb{R}^3$. Nous rappelons qu'un vecteur de l'espace peut être vu comme une représentation géométrique d'un déplacement dans l'espace. En particulier, un vecteur est complètement caractérisé par sa longueur, sa direction et son sens.

Il est connu d'un homme du métier qu'un produit scalaire dit euclidien et canonique est défini sur l'espace vectoriel $\mathbb{R}^3$ par l'application bilinéaire symétrique définie positive

$$\langle - | - \rangle : \mathbb{R}^3 \times \mathbb{R}^3 \to \mathbb{R}$$

définie par

$$\langle (x, y, z) | (x', y', z') \rangle := xx' + yy' + zz'$$

pour tout vecteurs

$$(x, y, z), (x', y', z') \in \mathbb{R}^3.$$

Ce produit scalaire euclidien canonique est aussi couramment et plus simplement dénommé par l'appellation « le produit scalaire ». Nous adopterons cette terminologie dans la suite du résumé de l'invention.

Rappelons qu'un vecteur $\vec{v}$ est dit dirigé partiellement d'un point A vers un point B si $\langle \overrightarrow{AB} \mid \vec{v} \rangle \geq 0$. Ceci revient essentiellement à ce que le vecteur $\overrightarrow{AB}$ soit le même sens que la projection orthogonale du vecteur $\vec{v}$ sur le vecteur $\overrightarrow{AB}$.

Rappelons également que l'espace euclidien $\mathbb{R}^3$ est muni d'une notion de distance d associée au produit scalaire et définie par

$$d\big((\mathrm{x},\mathrm{y},\mathrm{z}),(x',y',z')\big) := \sqrt{(x'-x)^2 + (y'-y)^2 + (z'-z)^2}$$

pour tout points (x, y, z) et (x', y', z') de l'espace. Cette notion de distance correspond à la notion de distance intuitive que l'homme de la rue utilise quotidiennement pour réaliser des mesures à notre échelle.

De plus, il est bien connu d'un homme du métier que le produit scalaire de deux vecteurs dans l'espace vectoriel $\mathbb{R}^3$ est intimement associé à une mesure de l'angle géométrique entre ces vecteurs. Plus précisément et plus particulièrement, si P et Q sont deux points de l'espace $\mathbb{R}^3$, et si O désigne l'origine pour un certain repère orthonormé de l'espace, l'angle interne du triangle POQ au sommet O, communément noté $\widehat{POQ}$, peut être obtenu implicitement par la formule

$$\langle \overrightarrow{OP} \mid \overrightarrow{OQ} \rangle = d(O,P)\, d(O,Q) \cos(\widehat{POQ})$$

où $\cos(\widehat{POQ})$ désigne le cosinus de l'angle $\widehat{POQ}$. Rappelons, de plus, que deux vecteurs de l'espace sont orthogonaux si et seulement si leur produit scalaire est nul. Afin de lever toute ambiguïté, précisons que le produit scalaire de deux vecteurs de l'espace est négatif (respectivement, positif) si et seulement si il est strictement négatif (respectivement, strictement positif) ou nul.

Ce cadre mathématique étant détaillé, nous précisons ce que nous entendons par les termes « trajectoire d'attaque » et « trajectoire principale » dans l'énoncé de la méthode selon l'invention. Ces précisions sont considérées comme facultatives pour un homme du métier habitué à la mise en pratique de méthode d'usinage laser. Une « trajectoire d'attaque » d'un faisceau laser dirigé vers un ou plusieurs points de l'espace (ou, plus précisément, du support d'usinage) est la trajectoire définie par le faisceau laser à son arrivée sur les un ou plusieurs points. En particulier, il ne s'agit pas d'une trajectoire globale qui serait définie par l'ensemble du faisceau laser, de la source laser, aux un ou plusieurs points de l'espace. Une « trajectoire principale » d'un flux de gaz en mouvement dans l'espace est, quant à elle, définie par une moyenne des trajectoires de chacune des particules de gaz du flux de gaz dans l'espace. Lorsque ces une ou plusieurs trajectoires d'attaque et trajectoire principale sont essentiellement définies par une droite ou un segment de droite, elles peuvent être caractérisées par un vecteur parallèle à la droite ou au segment de droite, dont le sens détermine un sens de parcours de la trajectoire.

Dans les paragraphes suivants, nous montrons en quoi la méthode proposée par l'invention permet une évacuation de poussières apparaissant lors d'un usinage laser (ou micro-usinage laser) de la pièce à usiner effectué au moyen du faisceau laser. Dans la suite, nous ne nous étendrons pas sur les avantages et les options préférentielles relatifs à la source laser, au système optiques ou au support d'usinage, ces éléments étant considérés comme connus et maîtrisés par un homme du métier habitué à la mise en pratique de méthodes d'usinage laser.

Lors de l'activation de la source laser, un faisceau laser est généré selon les techniques connues par un homme du métier. Le système optique permet de diriger, par des procéder bien connus d'un homme du métier, ce faisceau laser vers le support d'usinage du dispositif d'usinage laser, et donc au moins partiellement vers la pièce à usiner lorsque celle-ci est positionnée sur le support d'usinage du dispositif, la direction du faisceau laser se faisant selon une ou plusieurs trajectoires d'attaque caractérisées par un vecteur $\overrightarrow{AB}$ de l'espace.

La pièce à usiner est supportée par le support d'usinage par l'application d'une force $\vec{F}$ de réaction dirigée de l'extrémité basse du support d'usinage à l'extrémité haute du support d'usinage. Essentiellement, la pièce à usiner est en contact avec l'extrémité haute du support d'usinage. Le vecteur $\overrightarrow{AB}$ est dirigé au moins partiellement de l'extrémité haute du support d'usinage à l'extrémité basse du support d'usinage. La projection orthogonale du vecteur $\overrightarrow{AB}$ sur le vecteur $\vec{F}$ et le vecteur $\vec{F}$ sont donc de sens opposés.

Lorsque les moyens de génération et de direction du dispositif d'usinage laser selon l'invention sont activés, un flux de gaz est généré et dirigé vers une zone de l'espace qui surplombe le support d'usinage, le long d'une direction principale caractérisée, de préférence au moins au-dessus du support d'usinage, par le vecteur $\vec{v}$ dirigé partiellement (ou, de façon équivalente, partiellement parallèlement) de l'extrémité basse vers l'extrémité haute. En particulier, ce flux de gaz est dirigé vers une partie de l'espace qui comprend et/ou surplombe au moins partiellement la pièce à usiner. Le flux de gaz suit alors, en moyenne, une trajectoire selon la direction de l'espace définie par une droite parallèle audit vecteur, en direction de la zone ciblée. La trajectoire globale du flux de gaz est susceptible de varier par la suite (par exemple, dû à la gravité), l'essentiel étant que la direction initiale du flux de gaz dans la zone surplombant le support d'usinage, et de préférence entre les moyens de direction et la zone surplombant le support d'usinage se fait approximativement le long d'une droite, selon un sens défini par le vecteur $\vec{v}$ , et vers la zone.

Cette zone constitue une partie de l'espace qui comprend un ensemble ouvert relativement à la norme euclidienne associée au produit scalaire, cet ensemble ouvert comprenant et/ou surplombant au moins partiellement la pièce à usiner. De ce fait, le flux de gaz passe en surplomb, à proximité du support d'usinage et de la pièce à usiner.

Le vecteur $\vec{v}$ est dirigé partiellement de l'extrémité basse du support d'usinage à l'extrémité haute du support d'usinage. Nous insistons sur le fait que cette information concerne bien le vecteur $\vec{v}$ et non de la trajectoire principale. En particulier, les moyens de direction sont donc nécessairement configurés de sorte qu'il est possible de translater la trajectoire principale du flux de gaz pour que ce dernier attaque le support d'usinage à partir de son extrémité basse. La trajectoire principale du flux de gaz n'est toutefois pas nécessairement configurée pour attaquer le support d'usinage.

Compte tenu du fait que le vecteur $\vec{v}$ est dirigé partiellement de l'extrémité basse du support d'usinage à l'extrémité haute du support d'usinage, la projection orthogonale du vecteur $\vec{v}$ sur le vecteur $\vec{F}$ et le vecteur $\vec{F}$ sont de même sens. Il s'ensuit que la composante du vecteur $\vec{v}$ selon un axe d'un repère orthogonal qui serait défini par le vecteur $\vec{F}$ est de signe opposé à la composante du vecteur $\overrightarrow{AB}$ selon ce même axe. Autrement explicité, le sens de propagation du flux de gaz selon un axe défini par la force de réaction du support d'usinage est opposé au sens du vecteur caractérisant les une ou plusieurs trajectoires d'attaque du faisceau laser.

Concrètement, dans le cas où l'espace est muni du repère orthonormé canonique défini par les vecteurs

$$(1,0,0), \ (0,1,0) \ \text{et} \ (0,0,1)$$

correspondant respectivement à trois axes du repère, si nous avons $\vec{F} = (0,0,1) = -\overrightarrow{AB}$ , les une ou plusieurs trajectoires d'attaque du faisceau laser sont dirigées « du haut vers le bas », alors que le flux de gaz est dirigé « du bas vers le haut », dans une direction essentiellement transverse par rapport au repère.

Le formalisme utilisé dans la formulation de la méthode généralise ces considérations. Ainsi, compte tenu du fait que le flux de gaz passe à proximité de la pièce à usiner tel que commenté plus haut, une évacuation optimale des poussières apparaissant lors de l'usinage laser de la pièce est garantie loin de cette dernière. En effet, la nature du processus d'usinage fait que ces poussières d'usinage restent à proximité de la pièce à usiner et/ou sont projetées vers la zone. Le souffle du flux de gaz passant à proximité de la pièce, dans la zone, ainsi dirigé, génère un effet d'aspiration apte à entraîner un gaz comprenant ces poussières loin de la pièce à usiner. Ce gaz comprend typiquement de l'air ambiant mêlés à des poussières d'usinage. Ces poussières d'usinage sont alors entraînées par le flux de gaz et évacuées loin du voisinage immédiat de la pièce à usiner grâce à la direction et au sens de propagation du flux de gaz précédemment discuté et définis à partir d'une direction principale judicieusement choisie. Il s'ensuit une séparation rapide et particulièrement efficace des poussières à la surface et/ou à proximité de la pièce à usiner.

Le flux de gaz poursuivant sa course au-delà de la zone, ces poussières d'usinage, de même que le gaz dans son ensemble, sont aspirés dans le flux et mêlées à ce dernier jusqu'à ce que les moyens de récupération récupèrent ce gaz, au moins partiellement. Ainsi, en plus de l'évacuation simple et efficace des poussières d'usinage, la méthode selon l'invention propose une récupération des poussières d'usinage afin de limiter grandement les risques de contamination de la pièce à usiner.

L'effet d'aspiration est typiquement créé par une dépression vu qu'il suit de la création d'un flux de gaz dirigé dans la zone surplombant le support d'usinage. Préférentiellement l'effet d'aspiration est créé par effet Venturi. De façon générale, comme la trajectoire principale est caractérisée au-dessus du support d'usinage (et donc au-dessus de la pièce à usiner) par le vecteur $\vec{v}$ , il s'ensuit que l'effet d'aspiration selon l'invention constitue un effet de succion aérodynamique dirigé (au moins partiellement, de préférence globalement) selon le vecteur $\vec{v}$ et qui est avantageusement apte à aspirer et/ou à arracher des poussières de la surface de la pièce à usiner pendant l'usinage. En particulier, grâce à la composante du vecteur $\vec{v}$ associé à la direction « verticale » définie de l'extrémité basse à l'extrémité haute du support d'usinage, il est ainsi possible d'aspirer à la fois les poussières surplombant la pièce à usiner mais aussi et surtout de telles poussières qui seraient au niveau de la surface de cette pièce. Cette caractéristique est importante dans le cadre d'usinage de pièces de haute précision telles que des lentilles intraoculaires, des polymères et/ou des microprocesseurs.

Avantageusement, la mise en oeuvre de cette méthode est extrêmement simple et peu coûteuse. En effet, en considérant les infrastructures nécessaires à l'usinage laser comme étant fournies de façon évidente compte tenu de la problématique qui nous concerne, cette mise en oeuvre ne nécessite que des moyens pour générer un seul flux de gaz le long d'une seule direction transversalement à les une ou plusieurs trajectoires d'attaque du faisceau laser. En particulier, outre la source laser, le support d'usinage et le système optique, les moyens pour réaliser la méthode selon l'invention sont largement connus d'un homme du métier, très simples à concevoir, peu coûteux et peu encombrant. Ainsi, la méthode revendiquée tire pleinement profit des avantages des évolutions technologiques disponibles.

Avantageusement, la méthode selon l'invention permet désormais d'utiliser des technologies d'usinage laser pour nettoyer et/ou produire certaines pièces de haute précision qu'il n'était pas possible de nettoyer et/ou produire auparavant dû aux risques trop importants de contamination par des poussières. En particulier, et préférentiellement, la pièce à usiner est destinées à être incorporées ou à faire partie intégrante d'un dispositif médical ou un implant médical constitué principalement de polymères. Préférentiellement, la pièce à usiner comprend une lentille intraoculaire, une mince couche de matériau destinée au domaine photovoltaïque et/ou un composant protonique.

Préférentiellement, la pièce est couplée mécaniquement au support d'usinage durant l'exécution de la méthode afin de la maintenir à une position fixée. Préférentiellement, la pièce à usiner surplombe le support d'usinage.

Préférentiellement, le dispositif d'usinage laser comprend en outre un générateur de flux de gaz comprenant les moyens de génération et les moyens de direction. Plus préférentiellement, le générateur est un système hydraulique apte à fournir de l'air comprimé.

Préférentiellement, le flux de gaz est un flux d'air propre. Plus préférentiellement, le flux d'air propre est un flux d'air laminaire. Plus préférentiellement encore, le flux d'air est une lame d'air laminaire permettant la génération d'un effet d'aspiration optimal dans la zone surplombant le support d'usinage. Avantageusement, une telle lame d'air permet la génération d'un effet d'aspiration optimal des poussières d'usinage au voisinage de la pièce à usiner.

Préférentiellement, le flux de gaz consiste en une lame d'air évoluant le long d'une surface dont une partie est une portion de plan parallèle au vecteur $\vec{v}$ , lorsque les moyens de génération sont en action ; la trajectoire principale du flux de gaz consistant en une courbe sur la surface ; une distance entre la surface et le support d'usinage étant plus petite que trente centimètres, préférentiellement, plus petite que vingt centimètres, plus préférentiellement, plus petite que dix centimètres, plus préférentiellement encore, valant approximativement un centimètre. Cette distance est préférentiellement définie comme la plus petite distance euclidienne séparant un point de la surface et un point du support d'usinage. Un avantage de ce mode de réalisation préféré du dispositif est qu'il est particulièrement simple et compact. Il permet une évacuation des poussières en dirigeant le flux de gaz à proximité du support d'usinage, selon une seule trajectoire principale.

Préférentiellement, le volume de la zone qui surplombe le support d'usinage est borné par la valeur 1 m$^3$. Préférentiellement, la zone en surplomb est une portion d'ellipsoïde ou de parallélépipède rectangle. Plus préférentiellement, la zone en surplomb est une portion de sphère ouverte de rayon $R > 0$. De façon plus préférentielle encore, le rayon $R$ est plus petit que 20 centimètres, plus préférentiellement encore, le rayon R est plus petit que 10 centimètres. Préférentiellement, la portion de sphère est une demi sphère qui est centrée au centre de gravité de la pièce à usiner.

Préférentiellement, la distance la plus petite entre un point arbitraire de la pièce à usiner et une particule de gaz du flux de gaz est comprise 0,1 et 30 centimètres, plus préférentiellement entre 1 et 20 centimètres. Plus préférentiellement encore, cette distance vaut environ un centimètre..

Préférentiellement, les une ou plusieurs trajectoires d'attaque traversent la zone. Préférentiellement, les une ou plusieurs trajectoires d'attaque traversent le flux de gaz.

Préférentiellement, si A, B et C sont trois points de l'espace tels que le déplacement représenté par le vecteur $\overrightarrow{AB}$ envoie le point A sur le point B et le déplacement représenté par le vecteur $\vec{v}$ envoie le point A sur le point C, alors, l'angle interne au sommet du triangle BAC est compris entre 98° et 170°, plus préférentiellement, entre 120° et 150°, plus préférentiellement encore, entre 130° et 140°, plus préférentiellement encore, cet angle vaut 135°.

Préférentiellement, le gaz entraîner à distance du support d'usinage comprend de l'air ambiant et des poussières d'usinage. Plus préférentiellement, le gaz entraîner à distance du support d'usinage consiste en de l'air ambiant et des poussières d'usinage.

Préférentiellement, le gaz est entraîner à une distance comprise entre un et trente centimètres du support d'usinage.

Préférentiellement, les moyens de récupération récupèrent plus de 50% du gaz, plus préférentiellement, plus de 75% du gaz, plus préférentiellement, plus de 90% du gaz, encore plus préférentiellement, plus de 99% du gaz. Préférentiellement, les moyens de récupération récupèrent au moins une partie du flux de gaz, plus préférentiellement, plus de 90% du flux de gaz, plus préférentiellement, plus de 99% du flux de gaz.

Préférentiellement, les moyens de récupération récupèrent au moins un, préférentiellement au moins trois, encore plus préférentiellement au moins dix, encore plus préférentiellement au moins trente, millimètres cubes de poussières d'usinage par minute, lorsque le dispositif selon l'invention est en action. Préférentiellement, les moyens de récupération récupèrent entre quinze et quatre-vingt microgrammes de poussières d'usinage par minute, lorsque le dispositif selon l'invention est en action. Préférentiellement, les moyens de récupération récupèrent au moins une partie du flux de gaz chargé en gaz et en poussière d'usinage.

Préférentiellement, les moyens de récupérations sont aptes à traiter et/ou éliminer les poussières d'usinage qui sont présentes dans le gaz.

Préférentiellement, la méthode selon l'invention est exécutée automatiquement au moyen d'une unité logique.

Selon un mode de réalisation, la méthode comprend en outre l'étape :
(viii) refroidir au moins un parmi :

- le support d'usinage,
- la pièce à usiner,
- le gaz.

Ce mode de réalisation de la méthode selon l'invention est particulièrement avantageux. En effet, lors de l'application de la méthode, la focalisation du faisceau laser sur une portion d'une pièce à usiner génère usuellement une élévation de la température de la matière constituant cette portion. Le refroidissement d'au moins un parmi le support d'usinage, la pièce à usiner et le gaz contribue à prévenir une éventuellement contamination de la pièce à usiner par des poussières d'usinage se collant à sa surface à cause de la viscosité et de la température élevé de la matière. Ainsi, les poussières d'usinage sont plus facilement entraînées à distance du support d'usinage dans le gaz car elles ne collent pas à la pièce à usiner. Ce mode de réalisation méthode contribue donc à une évacuation davantage rapides et efficaces des poussières d'usinage. En outre, indépendamment de l'adjonction de cette étape de refroidissement, il faut noter que l'effet d'aspiration généré en tant que tel d'une dépression produit dans tous les cas un effet de refroidissement des poussières et/ou du gaz, de sorte que, même si des poussières retombaient sur la pièce à usiner, elles ne colleraient plus à celle-ci.

Préférentiellement, la pièce à usiner et/ou le gaz est refroidi de façon directe par effet Venturi, et/ou au moyen d'un système Peltier couplé mécaniquement au support d'usinage, et/ou au moyen d'un système de refroidissement.

Selon un premier mode de réalisation de ce mode de réalisation de la méthode, le support d'usinage est refroidi en premier lieu au moyen d'un système Peltier couplé mécaniquement au support d'usinage et la pièce à usiner est refroidie par la suite, par conduction. Selon un deuxième mode de réalisation de ce mode de réalisation de la méthode, le gaz est refroidi par effet Venturi. Selon un troisième mode de réalisation de ce mode de réalisation de la méthode, la pièce à usiner est directement refroidie par effet Venturi et/ou au moyen d'un système Peltier couplé mécaniquement au support d'usinage.

Selon un mode de réalisation préféré

de l'invention, une distance, mesurée le long
d'une direction verticale dirigée de l'extrémité basse vers l'extrémité haute, séparant un centre du flux de gaz, de préférence la trajectoire principale, et la pièce à usiner est comprise entre 0,1 et 20 centimètres, de préférence entre 0,1 et 10 centimètres, préférentiellement entre 0,5 et 5 centimètres. Selon des modes de réalisation préférés de l'invention :

- le flux de gaz généré à l'étape (v) consiste en une lame d'air d'une largueur comprise entre 10 et 30 centimètres ;
- le flux de gaz est généré à l'étape (v) et dirigé à l'étape (vi) avec une vitesse de flux comprise entre 0,2 et 10 mètres par seconde, de préférence entre 0,5 et 5 mètres par seconde, plus préférentiellement entre 1 et 2 mètres par seconde ;
- le flux de gaz généré à l'étape (v) avec un débit de flux compris entre 20 et 100 mètres cubes par seconde, de préférence entre 45 et 55 mètres cubes par seconde ;

- le flux de gaz généré à l'étape (v) consiste en une lame d'air présentant, à la sortie des moyens de direction, une aire correspondant à une valeur comprise entre 10 à 20 centimètres multipliés par une valeur comprise entre 0,5 à 5 centimètres, de préférence une aire de 45 centimètres carrés ;

de façon plus préférée encore cette lame d'air présente, à la sortie des moyens de direction, une section de rectangulaire, les côtés du rectangles étant de longueurs respectives comprises entre 10 à 20 centimètres et entre 0,5 et 5 centimètres, de préférence valant de façon respective 15 et 3 centimètres.

Une sélection et/ou tous ces derniers modes de réalisation préférés peuvent être combinés entre eux ou pas. Ces données numériques permettent d'amplifier l'effet technique d'aspiration du gaz à distance du support d'usinage.

Un autre objet de la présente invention consiste à fournir un dispositif d'usinage laser (ou micro-usinage laser) dont la mise en oeuvre est très simple et qui permet une gestion et/ou une évacuation très rapide et très efficace des poussières d'usinage loin de la pièce à usiner.

À cet effet, l'invention propose un dispositif d'usinage laser comprenant :

- une source laser ;
- un support d'usinage comprenant une extrémité haute et une extrémité basse
  pour recevoir et supporter une pièce à usiner
  par l'application d'une force dirigée de l'extrémité basse vers l'extrémité haute ;
- un système optique
  pour diriger un faisceau laser généré par la source laser vers le support d'usinage,
  selon une ou plusieurs trajectoires d'attaque,

  chacune des une ou plusieurs trajectoires d'attaque étant caractérisée par un vecteur $\overrightarrow{AB}$ dirigé au moins partiellement de l'extrémité haute vers l'extrémité basse ;
- des moyens de génération pour générer un flux de gaz ;
- des moyens de direction
  pour diriger le flux de gaz vers une zone surplombant le support d'usinage,

  le long d'une trajectoire principale caractérisée, au-dessus du support d'usinage, par un vecteur $\vec{v}$ dirigé partiellement de l'extrémité basse vers l'extrémité haute ;
  pour créer un effet d'aspiration apte à entraîner un gaz à distance du support d'usinage ;
- des moyens de récupération pour récupérer au moins une partie du gaz.

Le cadre mathématique et terminologique utilisé dans la présentation de la méthode selon l'invention s'étendent mutatis mutandis à la présentation susmentionnée du dispositif selon l'invention. Les modes de réalisation et les avantages de la méthode selon l'invention se transposent mutatis mutandis au présent dispositif d'usinage laser.

En particulier, le dispositif d'usinage proposé par l'invention est particulièrement avantageux. Il est très simple à mettre en oeuvre et permet une évacuation très rapide et très efficace de poussières susceptible d'apparaitre lors d'un usinage laser (ou micro-usinage laser) de la pièce à usiner effectué au moyen d'un faisceau laser.

Détaillons quelques modes de réalisation particuliers du dispositif selon l'invention. Ceux-ci peuvent être transposés directement en, ou correspondent à, des modes de réalisation particuliers de la méthode selon l'invention.

Selon un mode de réalisation du dispositif, les une ou plusieurs trajectoires d'attaque traversent le flux de gaz lorsque les moyens de génération sont en action.

Avantageusement, lorsque le dispositif d'usinage selon ce mode de réalisation de l'invention est en action, considérant les poussières d'usinage qui sont projetées dans la zone surplombant le support d'usinage après un impact du faisceau laser sur une pièce à usiner disposée sur le support d'usinage, ces poussières sont projetées vers une région de l'espace en amont des une ou plusieurs trajectoires d'attaque du faisceau laser, et donc, elles sont projetées en direction d'une région de l'espace définie par l'intersection entre la trajectoire du flux de gaz et la zone, de façon à rencontrer transversalement le flux de gaz, et à être d'autant plus facilement entraîner par celui-ci lorsqu'elles sont comprises dans le gaz.

L'efficacité du dispositif d'usinage s'en trouve d'autant accrue lorsque les une ou plusieurs trajectoires d'attaque rencontre la trajectoire du flux de gaz.

En particulier, les trajectoires définies par les vecteurs $\overrightarrow{AB}$ et $\vec{v}$ sont préférentiellement sécantes.

Selon un mode de réalisation non revendiqué du dispositif, le flux de gaz est un flux d'air laminaire.

Avantageusement, un tel flux de gaz est simple et peu coûteux à produire. De plus, la trajectoire d'un tel flux de gaz est avantageusement plus rectiligne et plus aisée à contrôler.

Préférentiellement, le flux de gaz est une lame d'air propre et/ou sec laminaire. Avantageusement, l'effet d'aspiration engendré par un tel flux de gaz s'en trouve amplifié.

Selon un mode de réalisation du dispositif, le gaz comprend des poussières d'usinage.

Préférentiellement, le gaz comprend de l'air ambiant et des poussières d'usinage. Préférentiellement, le gaz est constitué de poussières d'usinage et de l'air ambiant. Préférentiellement, le gaz comprend au moins 50% des poussières, plus préférentiellement, au moins 75% des poussières, plus préférentiellement encore, au moins 90% des poussières, plus préférentiellement encore, au moins 99% des poussières.

Selon un mode de réalisation de l'invention, le dispositif comprend en outre des moyens de canalisation pour canaliser le flux de gaz entre les moyens de direction et les moyens de récupération.

Avantageusement, les moyens de canalisation permettent à la trajectoire du flux de gaz d'être mieux contrôlée. La direction initiale du flux de gaz dans la zone surplombant le support d'usinage correspond par ailleurs plus fidèlement à celle du vecteur $\vec{v}$, car celle-ci est guidée par les moyens de canalisation et la protège de l'influence de facteurs externes.

Avantageusement, de tels moyens de canalisation sont largement connus d'un homme du métier, très simples à concevoir, peu coûteux et peu encombrant.

Selon un mode de réalisation de l'invention, le dispositif comprend en outre des moyens de canalisation qui satisfont aux propriétés suivantes :

- ils sont configurés pour canaliser le flux de gaz entre les moyens de direction et les moyens de récupération,
- ils comprennent au moins une ouverture pour recevoir le gaz entraîné par l'effet d'aspiration,
- ils sont configurés pour canaliser le gaz entre la au moins une ouverture et les moyens de récupération.

Avantageusement, les moyens de canalisation permettent à la trajectoire du flux de gaz et du gaz d'être mieux contrôlée de leurs entrées dans les moyens de canalisation, jusqu'aux moyens de récupération. La direction initiale du flux de gaz dans la zone surplombant le support d'usinage correspond par ailleurs plus fidèlement à celle du vecteur $\vec{v}$, car celle-ci est guidée par les moyens de canalisation et la protège de l'influence de facteurs externes. L'ouverture permet de canaliser l'aspiration du gaz au sein des moyens de canalisation et de contrôler avantageusement l'évacuation d'un grand nombre de poussières d'usinage comprises dans le gaz loin de la pièce à usiner.

Avantageusement, de tels moyens de canalisation sont largement connus d'un homme du métier, très simples à concevoir, peu coûteux et peu encombrant.

Préférentiellement, les moyens de canalisation comprennent une conduite de section droite essentiellement constante, munie de protubérance en son intérieur.

Selon un mode de réalisation d'un quelconque parmi les modes de réalisation du dispositif comprenant des moyens de canalisation, ces derniers comprennent une conduite présentant une première et une deuxième extrémités, la conduite présentant également une section droite d'aire variable qui a, dans une portion intermédiaire située entres les première et deuxième extrémités, une aire inférieure à l'aire de la section droite aux première et deuxième extrémités.

Préférentiellement, la zone comprend au moins partiellement la portion intermédiaire. Préférentiellement, l'ouverture est située au moins partiellement dans la portion intermédiaire.

Préférentiellement, selon le mode de réalisation du dispositif précédemment explicité, l'effet d'aspiration est généré par une dépression du flux de gaz dans la conduire.

Ce mode de réalisation se produit, en particulier, lorsqu'une diminution de l'aire de la section droite de la conduite sur la trajectoire du flux de gaz engendre une augmentation de la vitesse du flux de gaz dans la conduite, et donc une diminution de la pression. Ce phénomène est appelé effet Venturi. Plus préférentiellement, l'effet d'aspiration est donc généré par un effet Venturi dans la conduite.

Avantageusement, la réalisation d'une telle conduite sont largement connus d'un homme du métier, très simples à concevoir, peu coûteux et peu encombrant.

Préférentiellement, la conduite est un tube de Venturi.

Selon un mode de réalisation du dispositif, l'effet d'aspiration est apte à refroidir le support d'usinage et/ou le gaz.

Avantageusement, ce refroidissement contribue à prévenir une éventuellement contamination de la pièce à usiner par des poussières d'usinage susceptible d'adhérer à sa surface à cause de la viscosité et de la température élevé de la matière constituant la pièce à usiner.

Préférentiellement, le gaz comprend de l'air ambiant et des poussières d'usinage aptes à être refroidies par l'effet d'aspiration. Préférentiellement, l'effet d'aspiration est généré par un effet Venturi.

Selon un mode de réalisation de l'invention, le dispositif comprend en outre un système de refroidissement pour refroidir le support d'usinage et/ou le gaz.

Ce mode de réalisation de la méthode selon l'invention est particulièrement avantageux. En effet, lorsque le dispositif d'usinage est en action, la focalisation du faisceau laser sur une portion d'une pièce à usiner génère usuellement une élévation de la température de la matière constituant cette portion. Le refroidissement du support d'usinage et/ou du gaz contribue à prévenir une éventuellement contamination de la pièce à usiner par des poussières d'usinage se collant à sa surface à cause de la viscosité et de la température élevé de la matière. Ainsi, l'adhérence des poussières d'usinage sur la pièce à usiner est réduite et ces poussières sont plus facilement entraînées à distance du support d'usinage dans le gaz. Ce mode de réalisation contribue donc à une évacuation davantage rapides et efficaces des poussières d'usinage.

Préférentiellement, le système de refroidissement est un système Peltier couplé mécaniquement au support d'usinage et apte à refroidir la pièce à usiner par conduction lorsqu'elle est disposée sur le support d'usinage.

Préférentiellement, le dispositif d'usinage selon l'invention comprend une unité logique configurée, d'une part, pour coordonner l'activation de la source laser, des moyens de génération et des moyens de récupération, et, d'autre part, pour contrôler le système optique et les moyens de direction de façon à déterminer la direction du faisceau laser et celle du flux de gaz.

## Brève description des figures

D'autres caractéristiques et avantages de l'invention apparaîtront à la lecture de la description détaillée qui suit pour la compréhension de laquelle on se reportera aux figures annexées parmi lesquelles :

- la figure 1 illustre une vue tridimensionnelle d'un dispositif d'usinage laser selon un mode de réalisation de l'invention ;
- la figure 2 illustre une vue transversale d'un dispositif d'usinage laser selon un mode de réalisation de l'invention.

Les dessins des figures ne sont pas à l'échelle. Généralement, des éléments semblables sont dénotés par des références semblables dans les figures. Dans le cadre du présent document, les éléments identiques ou analogues peuvent porter les mêmes références. En outre, la présence de numéros de référence aux dessins ne peut être considérée comme limitative, y compris lorsque ces numéros sont indiqués dans les revendications.

## Description détaillée de modes de réalisation particuliers de l'invention

La présente invention est décrite avec des réalisations particulières et des références à des figures mais l'invention n'est pas limitée par celles-ci. Les dessins ou figures décrits ne sont que schématiques et ne sont pas limitants.

Dans le cadre du présent document, la notion de « couplage mécanique » entre deux éléments fait préférentiellement référence à un maintien mécanique fixe des positions de ces deux éléments l'un par rapport à l'autre. En particulier, un couplage mécanique entre deux éléments inclut la possibilité d'une fixation directe entre ces deux éléments, mais également celle d'une fixation indirecte au moyen d'au moins un élément intermédiaire. Toutefois, un couplage mécanique entre deux éléments n'exclut pas formellement un possible mouvement relatif entre ces deux éléments.

Dans le cadre du présent document, les termes « usinage » « usinage laser » et « micro-usinage laser » sont définis dans la section « Art antérieur » du présent document. Ces définitions sont d'application dans l'ensemble du présent document. Rappelons qu'un usinage laser d'une pièce est une réalisation d'une technique d'enlèvement de matière de la pièce par focalisation d'un rayon laser de façon à générer une grande quantité d'énergie sur une petite portion de la pièce. Rappelons également qu'un micro-usinage (respectivement, micro-usinage laser) est un type particulier d'usinage (respectivement, usinage laser) lorsque les tolérances ou les dimensions associées à la pièce à usiner sont de l'ordre du micromètre.

Dans le cadre du présent document, par les « poussières » générées lors d'un usinage, nous désignons non seulement des poussières mais aussi des débris et/ou des copeaux et/ou des limailles et/ou des éclaboussures qui sont générés par la matière de la pièce usinée et ne sont pas destinées à être incorporées à la pièce usinée.

Dans le cadre du présent document, « l'intérieur » d'un objet tridimensionnel creux est l'espace inclus au dedans de la surface concave définie par l'objet lui-même. En particulier, le volume intérieur de l'objet est, par définition, fini, alors que le volume extérieur de l'objet est infini.

Dans le cadre du présent document, un « nombre négatif » est un nombre plus petit ou égal à zéro, et un « nombre strictement négatif » est un nombre négatif non nul.

Dans le cadre du présent document, par le terme « l'espace », il est entendu l'espace spatial ambiant tridimensionnel sans courbure dans lequel des problématiques de physique et mécanique classique sont usuellement considérée à notre échelle. Typiquement, dans le cadre du présent document, nous assimilerons cet espace à l'espace vectoriel

$$\mathbb{R}^3 = \{(x, y, z) : x, y, z \in \mathbb{R}\}.$$

muni du repère orthonormé canonique défini par les vecteurs

$$(1,0,0), \quad (0,1,0) \quad \text{et} \quad (0,0,1)$$

correspondant respectivement à trois axes du repère notés et représentés par les lettres X, Y et Z dans le cadre présent document. Cet espace est muni d'un produit scalaire euclidien canonique, généralement appelé « produit scalaire » et défini précisément dans le résumé de l'invention du présent document.

Dans le cadre du présent document, une « direction de l'espace tridimensionnel » est définie par la donnée d'une droite de l'espace. En particulier, deux droites de l'espace définissent la même direction si et seulement si elles sont parallèles.

Dans le cadre du présent document, chaque droite dans l'espace possède deux « sens » de parcours. Si A et B sont deux points quelconques distincts d'une droite dans l'espace, le parcours de la droite en passant par A en premier et par B ensuite définit un premier sens, alors que le parcours de la droite en passant par B en premier et par A ensuite définit un deuxième sens, celui-ci étant dit « opposé » au premier sens. Ces deux sens peuvent être définis de façon équivalente par les données des vecteurs

$$\overrightarrow{AB} \quad \text{et} \quad \overrightarrow{BA} = -\overrightarrow{AB}$$

respectivement.

Nous rappelons qu'un vecteur de l'espace peut être vu comme une représentation géométrique d'un déplacement dans l'espace. En particulier, un vecteur est complètement caractérisé par sa longueur, sa direction et son sens. Dans le cadre d'une représentation graphique, et plus particulièrement, dans le cadre des figures présentées dans le présent document, l'emplacement d'un vecteur dans l'espace ou par rapport à un repère de l'espace n'a aucune importance.

Dans le cadre du présent document, nous dirons qu'un vecteur « $\vec{v}$ est dirigé d'un point A vers un point B » s'il existe un nombre r > 0 tel que $\overrightarrow{AB} = r\vec{v}$ . Dans le cadre du présent document, nous dirons qu'un vecteur « $\vec{v}$ est dirigé partiellement d'un point A vers un point B » si $\langle \overrightarrow{AB} \mid \vec{v} \rangle \geq 0$ . De façon équivalente, cette inéquation indique que la composante du vecteur $\vec{v}$ selon un axe défini par le vecteur $\overrightarrow{AB}$ est positive, c'est-à-dire que ces vecteurs ont le même sens selon cet axe.

Dans le cadre du présent document, une « trajectoire » d'un point de l'espace en mouvement est une courbe décrite par le mouvement de ce point dans l'espace. Une « trajectoire est dite caractérisée par un vecteur de l'espace » lorsque la trajectoire peut être définie au moyen d'une droite ou d'un segment de droite parcouru parallèlement audit vecteur, dans le sens dudit vecteur.

Dans le cadre du présent document, une « trajectoire d'attaque » d'un faisceau laser dirigé vers un ou plusieurs points de l'espace est la trajectoire définie par le faisceau laser à son arrivée sur les un ou plusieurs points de l'espace. En particulier, il ne s'agit pas de la trajectoire globale définie par l'ensemble du faisceau laser, de la source laser, aux un ou plusieurs points de l'espace.

Dans le cadre du présent document, une « trajectoire principale » d'un ensemble de particules (par exemple, appartenant à un fluide ou un gaz) en mouvement dans l'espace est définie par une moyenne des trajectoires de chacune des particules dans l'espace.

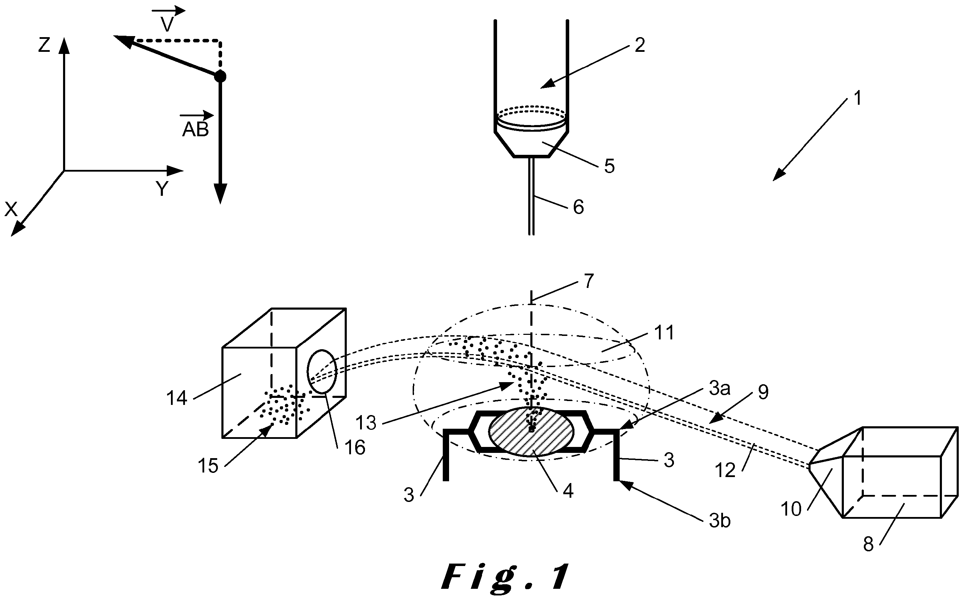

La figure 1 illustre d'un dispositif d'usinage laser 1 selon un mode de réalisation de l'invention.

Cette illustration est réalisation dans l'espace spatial ambiant tridimensionnel, assimilé à $\mathbb{R}^3$ et muni du repère orthonormé représenté par les axes X, Y et Z. Rappelons que la position du repère et des vecteurs dans cette représentation n'est en aucun cas limitative de la portée de l'invention revendiquée. Le repère et les vecteurs de l'espace représentés sur cette illustration auraient pu être positionnés n'importe où dans l'espace de façon scientifiquement et techniquement équivalente.

Le dispositif d'usinage laser 1 comprend une source laser 2, un support d'usinage 3 et un système optique dirigeant un faisceau laser 6 généré par la source laser 2 vers le support d'usinage 3. L'ensemble de ces éléments du dispositif 1 constitue une base évidente et élémentaire d'un dispositif d'usinage laser dont un homme du métier maîtrise les caractéristiques techniques et fonctionnelles.

L'objectif du dispositif 1 est d'usiner une pièce 4 disposée sur le support d'usinage 3. La pièce 4 peut être couplée mécaniquement au support d'usinage 3 pour plus de stabilité. Bien que n'apparaissant pas clairement dans l'illustration, la pièce 4 est préférentiellement un implant médical en polymères de haute précision pour lequel le risque de contamination par des poussières d'usinage est très important et pour lequel l'importance d'évacuation et la gestion de ces poussières est crucial. Cette réalisation préférée de la pièce 4 n'est pas limitative de la portée de l'invention. En particulier, une pièce comprenant au moins un parmi une mince couche de matériau à usage dans le domaine photovoltaïque ou un composant protonique ne se départirait pas du cadre de l'invention.

Le faisceau laser est dirigé selon une trajectoire d'attaque 7 caractérisée par un vecteur $\overrightarrow{AB}$. La trajectoire d'attaque 7 est représentée de façon non orientée par un segment de droite en traits. Dans le cas de cette représentation, le vecteur $\overrightarrow{AB}$ est de la forme (0,0, -z) pour un certain nombre z > 0.

Le support d'usinage 3 comprend une extrémité haute 3a et une extrémité basse 3b. Une force $\vec{F}$ de réaction (non représentée sur la figure 1) est exercée de l'extrémité basse 3b vers l'extrémité haute 3a sur la pièce 4. Dans le cas de cette représentation, vu que le support d'usinage et la pièce sont disposés de façon essentiellement horizontale, le vecteur force $\vec{F}$ est de sens opposé au vecteur $\overrightarrow{AB}$. En particulier, nous avons $\vec{F} = -f\,\overrightarrow{AB}$ pour un certain nombre f > 0.

Lors de l'usinage de la pièce 4, des poussières d'usinages 15 sont produites et contenu dans un gaz 13 essentiellement constitué d'air ambiant. Ces poussières 15 sont susceptibles de rester au moins partiellement à la surface de la pièce 4 et/ou d'être projetées dans un voisinage de la pièce 4.

Le dispositif d'usinage laser 1 comprend en outre des moyens de génération 8 et des moyens de direction 10 pour générer une lame d'air propre laminaire 9 vers une zone 11 surplombant le support d'usinage 3.

Selon le mode de réalisation représenté, la zone 11 est un ellipsoïde ouvert comprenant la surface supérieure de la pièce 4 en son intérieur. La forme et la position de la zone 11 représentée n'ont aucune valeur limitative. La zone 11 représentée est fictive. Elle délimite de façon purement illustrative une portion de l'espace surplombant le support d'usinage 3, vers laquelle est dirigée la lame d'air 9.

La direction de la lame d'air 9 au moyen des moyens de direction 10 se fait essentiellement le long d'une trajectoire principale 12 caractérisée par le vecteur $\vec{v}$ entre les moyens de direction 10 et la zone 11, et donc au-dessus du support d'usinage 3. Dans le cas de cette représentation, le vecteur $\vec{v}$ est de la forme (-x', -y', z') pour des nombres x', y', z' > 0. Ce vecteur est dirigé partiellement de l'extrémité basse 3b à l'extrémité haute 3a. Par conséquent, le produit scalaire des vecteurs $\vec{F}$ et $\vec{v}$ est nécessairement positif et, dans le mode de réalisation de l'invention présentement commenté, le produit scalaire des vecteurs $\overrightarrow{AB}$ et $\vec{v}$ est négatif :

$$\langle \overrightarrow{AB} \mid \vec{v} \rangle = 0x' + 0y' - zz' = -zz' < 0.$$

Dans le mode de réalisation illustré, la trajectoire d'attaque 7 est dirigée du « haut vers le bas » alors que la lame d'air 9 est dirigé obliquement « du bas vers le haut » de façon à passer au dessus de la pièce 4, dans la zone 11. Préférentiellement, la lame d'air passe environ un centimètre au dessus de la surface supérieure de la pièce 4.

En guise d'exemple numérique particulier représentatif, si nous notons $\theta$ le plus petit angle amenant le vecteur $\vec{v}$ sur le vecteur $\overrightarrow{AB}$, et si nous prenons les valeurs (par exemple, en mètres, mais l'unité de mesure n'a aucun impact sur le calcul) x' = 2, y' = 2, z' = 1 et z = 4, alors nous obtenons

$$\langle \overrightarrow{AB} \mid \vec{v} \rangle = \begin{cases} \sqrt{2^2 + 2^2 + 1^2}\,\sqrt{0^2 + 0^2 + 4^2}\,\cos\theta \\ -zz' = -4 \end{cases}$$

$$\Leftrightarrow 12\cos\theta = -4$$

$$\Leftrightarrow \cos\theta = -\frac{1}{3}$$

$$\Leftrightarrow \theta = 109{,}5°.$$

Cet angle est représenté en figure 1. Il appartient à un intervalle préféré de valeurs. Typiquement, l'angle $\theta$ est compris entre 98° et 170°.

Ainsi dirigé, la lame d'air 9 crée un effet d'aspiration au dessus de la pièce 4, dans la zone 11, selon une direction au moins partiellement verticale, c'est-à-dire suivant au moins partiellement le vecteur $-\overrightarrow{AB}$, cet effet permettant d'arracher de la surface de la pièce 4 et d'entraîner le gaz 13 comprenant les poussières d'usinage 15. Ce gaz 13 est essentiellement aspiré par la lame d'air 9, mêler et entraîner par celui-ci poursuivant sa trajectoire. Ainsi les poussières 15 sont arrachées et/ou éloignées rapidement, simplement et efficacement de la pièce 4 et du support d'usinage 3. En outre, l'effet d'aspiration crée un refroidissement du gaz 13 diminuant ainsi l'adhérence des poussières 15 à la surface de la pièce 4.

La plus grande partie de ce gaz 13 est récupéré par des moyens de récupération 14 comprenant une communication 16 pour absorber la lame d'air 9 et le gaz 13. Le risque de contamination de la pièce 4 par les poussières 15 est ainsi davantage réduit. Les poussières 15 sont enfin optionnellement séparées de l'air de la lame d'air 9 et du gaz 13, puis traitées et/ou éliminées.

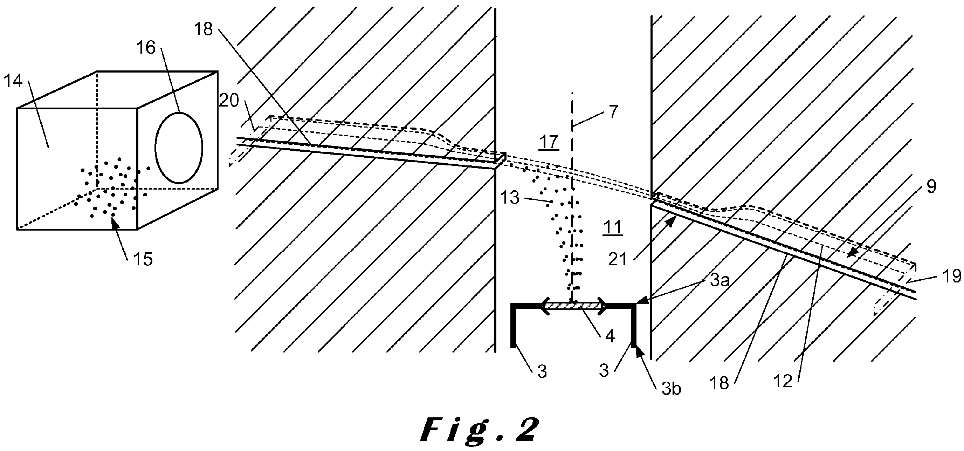

La figure 2 illustre d'un dispositif d'usinage laser selon un mode de réalisation particulier de l'invention, ce mode de réalisation comprenant, outre les éléments du mode de réalisation illustré en figure1, des moyens de canalisation consistant essentiellement en une conduite 18.

La représentation de ce mode de réalisation particulier, n'est en aucun cas limitative de la forme la conduite ou de la position de la conduite 18. Ce mode de réalisation de l'invention n'est pas limitatif du cas où les moyens de canalisation comprennent plus d'une conduite.

La représentation et le développement de ce mode de réalisation particulier est centrée sur les conséquences structurelles et fonctionnelles de la présence d'une conduite 18 telle qu'illustrée. En particulier, pour ne pas encombrer l'illustration, la source laser, le système optique, le faisceau laser, les moyens de génération et de détection du dispositif d'usinage laser n'ont plus été représentés en figure 2, étant donné que la représentation et fonctionnalité de ces éléments est essentiellement la même que dans le mode de réalisation illustré et commenté en figure 1.

Selon le mode de réalisation représenté, la conduite 18 a une structure de tube de Venturi, c'est-à-dire un tube déprimogène comprenant un rétrécissement interne. Une lame d'air 9 est généré et dirigé dans la conduite 18 aplatie de façon à être canalisé jusqu'aux moyens de récupération 14. Le rétrécissement interne de la conduite 18 est réalisé en rétrécissant la section droite de la conduite 18 dans une portion intermédiaire 21 située entre les extrémités 19, 20 de la conduite 18. En particulier, l'aire de la section droite de la conduite 18 à ses extrémités 19, 20 est plus grande que l'aire de la section droite de la conduite dans la portion intermédiaire 21. Cette structure de conduite 18 peut être réalisée lors de la fabrication de la conduite 18 en modelant le matériau la composant, ou, par exemple, en ajoutant des protubérances (non représentées) dans la conduite 18, au niveau de sa portion intermédiaire 21. La lame d'air 9 progressant dans la conduite 18 est alors accélérée dans la portion intermédiaire 21, ce qui engendre une baisse de pression dans celle-ci.

Une ouverture 17 est pratiquée dans la conduite 18, à proximité ou au moins partiellement dans la portion intermédiaire 21, de façon à créer un effet d'aspiration de l'air ambiant autour d'ouverture 17 vers l'intérieur de la conduite 18, ceci grâce à la baisse de pression générée au niveau de la portion intermédiaire 21.

Cette conduite est astucieusement placée de façon à ce que l'ouverture 17 soit située au dessus du support d'usinage 3 et de la pièce 4 à usiner, de façon à laisser passer le faisceau laser le long de sa trajectoire d'attaque 7. Les poussières d'usinage 15 sont alors aspirées, au sein du gaz 13 composé essentiellement d'air ambiant, par l'ouverture 17 à l'intérieur de la conduite 18, et entraîner dans la conduite 18 par la lame d'air 9 jusqu'à la communication 16 des moyens de récupération 14 avec la conduite 18. Les poussières 15 sont ainsi éloignées et gérées loin de la pièce 4 à usiner.

Notons que la zone 11 surplombant le support d'usinage 3 est, dans la représentation de la figure 2, une portion de l'espace entre le support d'usinage 3 et la partie supérieure de la conduite 18, cette portion comprenant l'ouverture 17.

Le support d'usinage 3 est préférentiellement couplé à un système Peltier et/ou à un autre système de refroidissement (non représentés) configurés pour refroidir le support d'usinage 3, et donc la pièce 4 par conduction.

En résumé, la présente invention concerne un dispositif d'usinage laser comprenant, en particulier, des moyens configurés pour générer et diriger un flux de gaz vers une zone surplombant un support d'usinage de façon à créer un effet d'aspiration apte à entraîner des poussières d'usinage à distance dudit support d'usinage. La méthode selon l'invention consiste essentiellement en un processus généralisant la mise en pratique du dispositif d'usinage laser susmentionné.

Une fois encore, nous tenons à insister sur le fait que la présente invention a été décrite en relation avec des modes de réalisations spécifiques, qui ont une valeur purement illustrative et ne doivent pas être considérés comme limitatifs. D'une manière générale, il apparaîtra évident pour l'homme du métier que la présente invention n'est pas limités aux exemples illustrés et/ou décrits ci-dessus. L'invention est définie par les revendications.

Dans la cadre du présent document, les termes « premier », « deuxième », « troisième » et « quatrième » servent uniquement à différencier les différents éléments et n'impliquent pas d'ordre entre ces éléments. L'usage des verbes « comprendre » , « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments.

**Revendications**

1.  Méthode de gestion de poussières d'usinage lors d'un usinage laser d'une pièce à usiner (4), ladite méthode comprenant les étapes suivantes :

    (i) fournir un dispositif (1) d'usinage laser comprenant :

    - une source laser (2) ;
    - un support d'usinage (3) comprenant une extrémité haute (3a) et une extrémité basse (3b)
    pour recevoir et supporter une pièce à usiner (4)
    par l'application d'une force dirigée de ladite extrémité basse (3b) vers ladite extrémité haute (3a) ;
    - un système optique (5)
    pour diriger un faisceau laser (6) généré par ladite source laser (2) vers ledit support d'usinage (3),
    selon une ou plusieurs trajectoires d'attaque (7),

    chacune desdites une ou plusieurs trajectoires d'attaque (7) étant **caractérisée par** un vecteur $\overrightarrow{AB}$ dirigé
    au moins partiellement de ladite extrémité haute (3a) vers ladite extrémité basse (3b) ;
    - des moyens de génération (8) pour générer un flux de gaz (9) ;
    - des moyens de direction (10)
    pour diriger ledit flux de gaz (9) vers une zone (11) surplombant ledit support d'usinage (3) ;
    - des moyens de récupération (14) pour récupérer au moins une partie dudit gaz (13) ;

    (ii) placer ladite pièce à usiner (4) sur ledit support d'usinage (3) ;
    (iii) activer ladite source laser (2) pour générer ledit faisceau laser (6) ;
    (iv) diriger ledit faisceau laser (6) au moyen dudit système optique (5) vers ledit support d'usinage (3), selon lesdites une ou plusieurs trajectoires d'attaque (7) ;
    (v) activer lesdits moyens de génération (8) pour générer ledit flux de gaz (9) ;
    (vi) diriger ledit flux de gaz (9)

    au moyen desdits moyens de direction (10),
    vers ladite zone (11) surplombant ledit support d'usinage (3) ;

    (vii) récupérer au moins ladite partie dudit gaz (13)
    au moyen des moyens de récupération (14) ;
    **caractérisée en ce que**

    - lesdits moyens de direction (10) sont configurés pour diriger ledit flux de gaz (9) le long d'une trajectoire principale (12) **caractérisée**, au-dessus dudit support d'usinage (3), par un vecteur $\vec{v}$ dirigé partiellement de ladite extrémité basse (3b) vers ladite extrémité haute (3a), pour créer un effet d'aspiration apte à entraîner un gaz (13) à distance dudit support d'usinage (3) ;
    - ledit flux de gaz (9) est dirigé à l'étape (vi) le long de ladite trajectoire principale (12), au-dessus de ladite pièce à usiner (4), pour créer ledit effet d'aspiration, pour entraîner ledit gaz (13) à distance dudit support d'usinage (3).

2.  Méthode selon la revendication précédente, **caractérisés en ce qu'**elle comprend en outre l'étape :
    (viii) refroidir au moins un parmi :

    - ledit support d'usinage (3),
    - ladite pièce à usiner (4),
    - ledit gaz (13).

3.  Méthode selon l'une quelconque des revendications précédentes, **caractérisée en ce qu'**une distance, mesurée le long d'une direction verticale dirigée de ladite extrémité basse (3b) vers ladite extrémité haute (3a), séparant ladite trajectoire principale (12) et ladite pièce à usiner (4) est comprise entre 0,1 et 20 centimètres.

4. Méthode selon l'une quelconque des revendications précédentes, **caractérisée en ce que** ledit flux de gaz (9) généré à l'étape (v) consiste en une lame d'air d'une largueur comprise entre 10 et 30 centimètres.

5. Méthode selon l'une quelconque des revendications précédentes, **caractérisée en ce que** ledit flux de gaz (9) est généré à l'étape (v) et dirigée à l'étape (vi) avec une vitesse de flux comprise entre 0,2 et 10 mètres par seconde, de préférence entre 0,5 et 5 mètres par seconde, plus préférentiellement entre 1 et 2 mètres par seconde.

6. Méthode selon l'une quelconque des revendications précédentes, **caractérisée en ce que** ledit flux de gaz (9) est généré à l'étape (v) avec un débit de flux compris entre $6*10^{-4}$ et $30*10^{-3}$ mètres cubes par seconde, de préférence entre $10^{-3}$ et $2*10^{-3}$ mètres cubes par seconde.

7. Dispositif (1) d'usinage laser comprenant :

- une source laser (2) ;
- un support d'usinage (3) comprenant une extrémité haute (3a) et une extrémité basse (3b) pour recevoir et supporter une pièce à usiner (4) par l'application d'une force dirigée de ladite extrémité basse (3b) vers ladite extrémité haute (3a) ;
- un système optique (5)
pour diriger un faisceau laser (6) généré par ladite source laser (2) vers ledit support d'usinage (3), selon une ou plusieurs trajectoires d'attaque (7),

chacune desdites une ou plusieurs trajectoires d'attaque (7) étant **caractérisée par** un vecteur $\overrightarrow{AB}$ dirigé au moins partiellement de ladite extrémité haute (3a) vers ladite extrémité basse (3b) ;
- des moyens de génération (8) pour générer un flux de gaz (9) ;
- des moyens de direction (10)
pour diriger ledit flux de gaz (9) vers une zone (11) surplombant ledit support d'usinage (3) ;
- des moyens de récupération (14) pour récupérer au moins une partie dudit gaz (13) ;

**caractérisé en ce que**
lesdits moyens de direction (10) sont configurés pour diriger ledit flux de gaz (9) le long d'une trajectoire principale (12) **caractérisée**, au-dessus dudit support d'usinage (3), par un vecteur $\vec{v}$ dirigé partiellement de ladite extrémité basse (3b) vers ladite extrémité haute (3a), pour créer un effet d'aspiration apte à entraîner un gaz (13) à distance dudit support d'usinage (3).

8. Dispositif (1) selon la revendication précédente, **caractérisé en ce que** lesdites une ou plusieurs trajectoires d'attaque (7) traversent ledit flux de gaz (9) lorsque lesdits moyens de génération (8) sont en action.

9. Dispositif (1) selon l'une quelconque des revendications 7 à 8, **caractérisé en ce que** ledit flux de gaz (9) consiste en une lame d'air évoluant le long d'une surface dont une partie est une portion de plan parallèle audit vecteur $\vec{v}$, lorsque lesdits moyens de génération (8) sont en action ; **en ce que** ladite trajectoire principale (12) consiste en une courbe sur ladite surface ; et **en ce qu'**une distance entre ladite surface et ledit support d'usinage (3) est plus petite que vingt centimètres.

10. Dispositif (1) selon l'une quelconque des revendications 7 à 9, **caractérisé en ce qu'**il comprend en outre des moyens de canalisation pour canaliser ledit flux de gaz (9) entre lesdits moyens de direction (10) et lesdits moyens de récupération (14).

11. Dispositif (1) selon la revendication précédente, **caractérisé en ce que** lesdits moyens de canalisation comprennent au moins une ouverture (17) pour recevoir ledit gaz (13) entraîné par ledit effet d'aspiration, et **en ce que** lesdits moyens de canalisation sont configurés pour canaliser ledit gaz (13) entre ladite au moins une ouverture (17) et lesdits moyens de récupération (14).

12. Dispositif (1) selon l'une quelconque des revendications 10 ou 11, **caractérisé en ce que** lesdits moyens de canalisation comprennent une conduite (18) présentant une section droite d'aire variable, **en ce que** ladite conduite (18) présente une première et une deuxième extrémités (19, 20), et **en ce que** ladite section droite a, dans une portion intermédiaire (21) située entre lesdites première et deuxième extrémités (19, 20), une aire inférieure à l'aire de la section droite auxdites première et deuxième extrémités (19, 20).

13. Dispositif (1) selon la revendication précédente, **caractérisé en ce que** ledit effet d'aspiration est généré par un effet Venturi dans ladite conduite (18).

14. Dispositif (1) selon l'une quelconque des revendications 7 à 13, caractérisé en ce ledit effet d'aspiration est apte à refroidir ledit support d'usinage (3) et/ou ledit gaz (13).

15. Dispositif (1) selon l'une quelconque des revendications 7 à 14, **caractérisé en ce qu'**il comprend en outre un système de refroidissement pour refroidir ledit support d'usinage (3) et/ou ledit gaz (13).

**Patentansprüche**

1. Verwaltungsverfahren von Bearbeitungsstaub bei einer Laserbearbeitung eines zu bearbeitenden Teils (4), wobei das Verfahren die folgenden Schritte umfasst:

(i) Bereitstellen einer Laserbearbeitungsvorrichtung (1), umfassend:

- eine Laserquelle (2);
- einen Bearbeitungsträger (3), der ein oberes Ende (3a) und ein unteres Ende (3b) umfasst, um ein zu bearbeitendes Teil (4) aufzunehmen und zu tragen, indem eine Kraft angelegt wird, die von dem unteren Ende (3b) zu dem oberen Ende (3a) gerichtet ist;
- ein optisches System (5), um einen Laserstrahl (6), der von der Laserquelle (2) erzeugt wird, zu dem Bearbeitungsträger (3) gemäß einer oder mehreren Angriffsbahnen (7) zu richten,

wobei jede der einen oder mehreren Angriffsbahnen (7) von einem Vektor $\overrightarrow{AB}$ gekennzeichnet ist, der mindestens teilweise von dem oberen Ende (3a) zu dem unteren Ende (3b) gerichtet ist;
- Erzeugungsmittel (8), um einen Gasstrom (9) zu erzeugen;
- Lenkmittel (10), um den Gasstrom (9) zu einer Zone (11) über dem Bearbeitungsträger (3) zu lenken;
- Rückgewinnungsmittel (14), um mindestens einen Teil des Gases (13) zurückzugewinnen;

(ii) Platzieren des zu bearbeitenden Teils (4) auf dem Bearbeitungsträger (3);
(iii) Aktivieren der Laserquelle (2), um den Laserstrahl (6) zu erzeugen;
(iv) Lenken des Laserstrahl (6) mittels des optischen Systems (5) zu dem Bearbeitungsträger (3) gemäß der einen oder den mehreren Angriffsbahnen (7);
(v) Aktivieren der Erzeugungsmittel (8), um den Gasstrom (9) zu erzeugen;
(vi) Lenken des Gasstroms (9)

mittels der Lenkmittel (10)
zu der Zone (11) über dem Bearbeitungsträger (3);

(vii) Rückgewinnen mindestens des Teils des Gases (13)
mittels der Rückgewinnungsmittel (14);

**dadurch gekennzeichnet, dass**

- die Lenkmittel (10) dazu konfiguriert sind den Gasstrom (9) entlang einer Hauptbahn (12) zu lenken, die über dem Bearbeitungsträger (3) von einem Vektor $\vec{v}$ charakterisiert ist, der teilweise von dem unteren Ende (3b) zu dem oberen Ende (3a) gerichtet ist, um eine Saugwirkung zu schaffen, die dazu in der Lage ist, ein Gas (13) in einem Abstand von dem Bearbeitungsträger (3) mitzureißen;
- wobei der Gasstrom (9) bei dem Schritt (vi) entlang der Hauptbahn (12) über dem zu bearbeitenden Teil (4) gelenkt wird, um die Saugwirkung zu schaffen, um das Gas (13) von dem Bearbeitungsträger (3) beabstandet mitzureißen.

**2.** Verfahren nach dem vorstehenden Anspruch, **dadurch gekennzeichnet, dass** es außerdem den folgenden Schritt umfasst:

(viii) Kühlen mindestens eines von:

- dem Bearbeitungsträger (3),
- dem zu bearbeitenden Teil (4),
- dem Gas (13).

**3.** Verfahren nach einem der vorstehenden Ansprüche, **dadurch gekennzeichnet, dass** ein Abstand, entlang einer vertikalen Richtung gemessen, die von dem unteren Ende (3b) zu dem oberen Ende (3a) gerichtet ist, der die Hauptbahn (12) von dem zu bearbeitenden Teil (4) trennt, zwischen 0,1 und 20 Zentimetern liegt.

**4.** Verfahren nach einem der vorstehenden Ansprüche, **dadurch gekennzeichnet, dass** der Gasstrom (9), der bei dem Schritt (v) erzeugt wird, aus einer Luftzunge mit einer Breite zwischen 10 und 30 Zentimetern besteht.

**5.** Verfahren nach einem der vorstehenden Ansprüche, **dadurch gekennzeichnet, dass** der Gasstrom (9) bei dem Schritt (v) erzeugt und bei dem Schritt (vi) mit einer Flussgeschwindigkeit zwischen 0,2 und 10 Metern pro Sekunde, bevorzugt zwischen 0,5 und 5 Metern pro Sekunde, bevorzugter zwischen 1 und 2 Metern pro Sekunde gelenkt wird.

**6.** Verfahren nach einem der vorstehenden Ansprüche, **dadurch gekennzeichnet, dass** der Gasstrom (9) bei dem Schritt (v) mit einer Flussrate zwischen $6*10^{-4}$ und $30*10^{-3}$ Kubikmetern pro Sekunde, bevorzugt zwischen $10^{-3}$ und $2*10^{-3}$ Kubikmetern pro Sekunde erzeugt wird.

**7.** Laserbearbeitungsvorrichtung (1), umfassend:

- eine Laserquelle (2);
- einen Bearbeitungsträger (3), der ein oberes Ende (3a) und ein unteres Ende (3b) umfasst, um ein zu bearbeitendes Teil (4) durch Anlegen einer Kraft, die von dem unteren Ende (3b) zu dem oberen Ende (3a) gerichtet ist, aufzunehmen und zu tragen;
- ein optisches System (5),
um einen Laserstrahl (6), der von der Laserquelle (2) erzeugt wird, zu dem Bearbeitungsträger (3) gemäß einer oder mehreren Angriffsbahnen (7) zu richten,

wobei jede der einen oder mehreren Angriffsbahnen (7) von einem Vektor $\overrightarrow{AB}$ , gekennzeichnet ist, der mindestens teilweise von dem oberen Ende (3a) zu dem unteren Ende (3b) gerichtet ist;
- Erzeugungsmittel (8), um einen Gasstrom (9) zu erzeugen;
- Lenkmittel (10),
um den Gasstrom (9) zu einer Zone (11) über dem Bearbeitungsträger (3) zu lenken;
- Rückgewinnungsmittel (14), um mindestens einen Teil des Gases (13) zurückzugewinnen;

**dadurch gekennzeichnet, dass**
die Lenkmittel (10) dazu konfiguriert sind den Gasstrom (9) entlang einer Hauptbahn (12) zu lenken, die über dem Bearbeitungsträger (3) von einem Vektor $\vec{v}$ charakterisiert ist, der teilweise von dem unteren Ende (3b) zu dem oberen Ende (3a) gerichtet ist, um eine Saugwirkung zu schaffen, die dazu in der Lage ist, ein Gas (13) in einem Abstand von dem Bearbeitungsträger (3) mitzureißen.

**8.** Vorrichtung (1) nach dem vorstehenden Anspruch, **dadurch gekennzeichnet, dass** die oder mehrere Angriffsbahnen (7) den Gasstrom (9) durchqueren, wenn die Erzeugungsmittel (8) in Aktion sind.

**9.** Vorrichtung (1) nach einem der Ansprüche 7 bis 8, **dadurch gekennzeichnet, dass** der Gasstrom (9) aus einer Luftzunge besteht, die sich entlang einer Oberfläche entwickelt, von der ein Teil ein Abschnitt einer Ebene parallel

zu dem Vektor $\vec{v}$ ist, wenn die Erzeugungsmittel (8) in Aktion sind; dass die Hauptbahn (12) aus einer Kurve auf der Oberfläche besteht; und dass ein Abstand zwischen der Oberfläche und dem Bearbeitungsträger (3) kleiner als zwanzig Zentimeter ist.

**10.** Vorrichtung (1) nach einem der Ansprüche 7 bis 9, **dadurch gekennzeichnet, dass** sie außerdem Kanalisierungsmittel umfasst, um den Gasstrom (9) zwischen den Lenkmitteln (10) und den Rückgewinnungsmitteln (14) zu kanalisieren.

**11.** Vorrichtung (1) nach dem vorstehenden Anspruch, **dadurch gekennzeichnet, dass** die Kanalisierungsmittel mindestens eine Öffnung (17) umfassen, um das Gas (13), das von der Saugwirkung mitgerissen wird, aufzunehmen, und dass die Kanalisationsmittel dazu konfiguriert sind, das Gas (13) zwischen der mindestens einen Öffnung (17) und den Rückgewinnungsmitteln (14) zu kanalisieren.

**12.** Vorrichtung (1) nach einem der Ansprüche 10 oder 11, **dadurch gekennzeichnet, dass** die Kanalisierungsmittel eine Leitung (18) umfassen, die einen geraden Querschnitt mit variabler Fläche aufweist, dass die Leitung (18) ein erstes und ein zweites Ende (19, 20) aufweist, und dass der gerade Querschnitt in einem Zwischenabschnitt (21), der zwischen dem ersten und dem zweiten Ende (19, 20) liegt, eine Fläche kleiner als die Fläche des geraden Querschnitts an dem ersten und dem zweiten Ende (19, 20) aufweist.

**13.** Vorrichtung (1) nach dem vorstehenden Anspruch, **dadurch gekennzeichnet, dass** die Saugwirkung von einem Venturi-Effekt in der Leitung (18) erzeugt wird.

**14.** Vorrichtung (1) nach einem der Ansprüche 7 bis 13, **dadurch gekennzeichnet, dass** die Saugwirkung dazu in der Lage ist, den Bearbeitungsträger (3) und/oder das Gas (13) zu kühlen.

**15.** Vorrichtung (1) nach einem der Ansprüche 7 bis 14, **dadurch gekennzeichnet, dass** sie außerdem ein Kühlsystem zum Kühlen des Bearbeitungsträgers (3) und/oder des Gases (13) umfasst.

**Claims**

**1.** A method for managing machining dust during laser machining of a workpiece (4), said method comprising the steps of:

    (i) providing a laser machining device (1) comprising:

        - a laser source (2);
        - a machining support (3) comprising a top end (3a) and a bottom end (3b);
        for receiving and supporting a workpiece (4)
        by the application of a force directed from said bottom end (3b) toward said top end (3a);
        - an optical system (5)
        for directing a laser beam (6) generated by said laser source (2) toward said machining support (3), according to one or more attack trajectories (7),

        each of said one or more attack trajectories (7) being **characterized by** a vector $\overrightarrow{AB}$ directed at least partially from said top end (3a) toward said bottom end (3b);
        - generating means (8) for generating a gas stream (9);
        - directing means (10)
        for directing said gas stream (9) toward a zone (11) lying above said machining support (3);
        - recovery means (14) for recovering at least part of said gas (13);

    (ii) placing said workpiece (4) on said machining support (3);
    (iii) activating said laser source (2) for generating said laser beam (6);
    (iv) directing said laser beam (6) by means of said optical system (5) toward said machining support (3), according to said one or more attack trajectories (7);
    (v) activating said generating means (8) to generate said gas stream (9);
    (vi) directing said gas stream (9)

        by means of said directing means (10),
        toward said zone (11) lying above said machining support (3);

    (vii) recovering at least said part of said gas (13)
    by means of the recovery means (14);

**characterized in that**

- said directing means (10) are configured to direct said gas stream (9) along a main trajectory (12) characterized,
above said machining support (3), by a vector $\vec{v}$ directed partially from said bottom end (3b) toward said top end (3a), to create a suction effect able to entrain a gas (13) away from said machining support (3);
- said gas stream (9) is directed in step (vi) along said main trajectory (12), above said workpiece (4), to create said suction effect, to entrain said gas (13) away from said machining support (3).

2. The method according to the preceding claim, **characterized in that** it further comprises the step of:
(viii) cooling at least one of:

   - said machining support (3),
   - said workpiece (4),
   - said gas (13).

3. The method according to any one of the preceding claims, **characterized in that** a distance, measured along a vertical direction directed from said bottom end (3b) toward said top end (3a), separating said main trajectory (12) and said workpiece (4) is between 0.1 and 20 centimetres.

4. The method according to any of the preceding claims, **characterized in that** said gas stream (9) generated in step (v) consists of an air gap with a width of between 10 and 30 centimetres.

5. The method according to any of the preceding claims, **characterized in that** said gas stream (9) is generated in step (v) and directed in step (vi) with a stream velocity of between 0.2 and 10 meters per second, preferably between 0.5 and 5 meters per second, more preferably between 1 and 2 meters per second.

6. The method according to any of the preceding claims, **characterized in that** said gas stream (9) is generated in step (v) with a stream flow rate comprised between $6*10^{-4}$ and $30*10^{-3}$ cubic meters per second, preferably between $10^{-3}$ and $2*10^{-3}$ cubic meters per second.

7. A laser machining device (1) comprising:

   - a laser source (2);
   - a machining support (3) comprising a top end (3a) and a bottom end (3b) for receiving and supporting a workpiece (4) by the application of a force directed from said bottom end (3b) toward said top end (3a);
   - an optical system (5)
   for directing a laser beam (6) generated by said laser source (2) toward said machining support (3),
   according to one or more attack trajectories (7),

   each of said one or more attack trajectories (7) being **characterized by** a vector $\overrightarrow{AB}$ directed at least partially from said top end (3a) toward said bottom end (3b);
   - generating means (8) for generating a gas stream (9);
   - directing means (10)
   for directing said gas stream (9) toward a zone (11) lying above said machining support (3);
   - recovery means (14) for recovering at least part of said gas (13);

   **characterized in that**
   said directing means (10) are configured for directing said gas stream (9) along a main trajectory (12) characterized, above said machining support (3), by a vector $\vec{v}$ directed partially from said lower end (3b) toward said top end (3a), to create a suction effect able to entrain a gas (13) away from said machining support (3).

8. The device (1) according to the preceding claim, **characterized in that** said one or more attack trajectories (7) pass through said gas stream (9) when said generating means (8) are in action.

9. The device (1) according to any one of claims 7 to 8, **characterized in that** said gas stream (9) consists of an air gap moving along a surface, a part of which is a portion of a plane parallel to said vector $\vec{v}$ , when said generating means (8) are in action; **in that** said main trajectory (12) consists of a curve on said surface; and **in that** a distance between said surface and said machining support (3) is smaller than twenty centimeters.

10. The device (1) according to any one of claims 7 to 9, **characterized in that** it further comprises channelling means for channelling said gas stream (9) between said directing means (10) and said recovery means (14).

11. The device (1) according to the preceding claim, **characterized in that** said channelling means comprise at least one opening (17) for receiving said gas (13) entrained by said suction effect, and **in that** said channelling means are configured to channel said gas (13) between said at least one opening (17) and said recovery means (14).

12. The device (1) according to any one of claims 10 or 11, **characterized in that** said channelling means comprise a conduct (18) having a cross-section of variable area, **in that**
said conduct (18) has a first and a second ends (19, 20), and **in that** said cross-section has, in an intermediate portion (21) located between said first and second ends (19, 20), an area smaller than the area of the cross-section at said first and second ends (19, 20).

13. The device (1) according to the preceding claim, **characterized in that** said suction effect is generated by a Venturi effect in said conduct (18).

14. The device (1) according to any one of claims 7 to 13, **characterized in that** said suction effect is capable of cooling said machining support (3) and/or said gas (13).

15. The device (1) according to any one of claims 7 to 14, **characterized in that** it further comprises a cooling system for cooling said machining support (3) and/or said gas (13).

*Fig. 1*

EP 3 801 975 B1

**Fig. 2**

EP 3 801 975 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP H11254176 A